# FASCICULE DE BREVET EUROPEEN

(11) **EP 2 351 159 B1**
(45) Date de publication et mention de la délivrance du brevet: **29.08.2012**
(21) Numéro de dépôt: 09795485.3
(22) Date de dépôt: 23.11.2009
(51) Int. Cl.: H01R 13/58

(54) **DISPOSITIF DE CONNEXION D'UN SERVOMOTEUR A AU MOINS UN CABLE ELECTRIQUE**
VORRICHTUNG ZUR VERBINDUNG EINES SERVOMOTORS MIT MINDESTENS EINEM ELEKTRISCHEN KABEL
DEVICE FOR CONNECTING A SERVOMOTOR TO AT LEAST ONE ELECTRICAL CABLE

(30) Priorité: 28.11.2008 FR 0858079
(43) Date de publication de la demande: 03.08.2011
(73) Titulaire: Bernard Controls, 95500 Gonesse (FR)
(72) Inventeur: BERNARD, Etienne, F-75016 Paris (FR); AUBERT MAGUERO, Gilles, F-75012 Paris (FR)
(74) Mandataire: Thinat, Michel
(86) Numéro de dépôt international: PCT/FR2009/052247
(87) Numéro de publication internationale: WO 2010/061104

(56) Documents cités:
- EP-A- 0 433 247
- EP-A- 0 536 441
- EP-A- 0 655 822
- DE-A1- 3 206 071
- DE-A1- 3 305 297
- DE-A1-102006 033 186
- DE-U1- 20 109 298
- DE-U1- 29 521 213
- US-A- 4 518 886
- US-A- 5 006 742
- US-A- 5 045 736
- US-A- 5 872 410
- US-B2- 6 969 284

## Description

La présente invention a pour objet un dispositif de connexion d'un servomoteur à au moins un câble électrique. Elle a également pour objet un servomoteur muni d'un tel dispositif.

Un servomoteur est conçu pour générer un mouvement précis d'un élément mécanique, par exemple une vanne industrielle, selon une commande externe. Un servomoteur est ainsi un système motorisé capable d'atteindre des positions prédéterminées, puis de les maintenir. La position est, dans le cas d'un servomoteur rotatif, une position d'angle, et, dans le cas d'un servomoteur linéaire, une position de distance. Le démarrage et la conservation de la position prédéterminée sont commandés par la commande externe via au moins un câble électrique.

Pour relier le servomoteur au câble, il est connu d'utiliser un connecteur. Un connecteur pour ce type d'application comprend typiquement au moins une entrée de câble, ainsi qu'une ouverture destinée à être fermée par un élément de connexion électrique apte à être connecté au servomoteur. Un tel connecteur est décrit dans le document US-5,006,742.

Dans certains cas, par exemple en cas d'incident dans une centrale nucléaire, le servomoteur peut se trouver dans une enceinte sous pression élevée de vapeur d'eau. Du fait du gradient de pression entre l'extérieur et l'intérieur du connecteur, de la vapeur d'eau risque de pénétrer dans le câble et de migrer par la gaine du câble jusque dans le connecteur et de pénétrer ensuite dans le servomoteur, ce qui risque d'endommager fortement l'équipement électrique du servomoteur.

Une solution connue pour éviter cette migration de vapeur d'eau consiste à couler de la résine dans le connecteur, ainsi qu'à l'intérieur de la gaine du câble, de manière à noyer les fils du câble dans la résine.

Cette technique est toutefois difficile à mettre en oeuvre et est très coûteuse. En outre, du fait de la présence de la résine, il devient impossible d'intervenir dans le câble.

L'invention vise à remédier à ces inconvénients.

L'invention propose un dispositif de connexion d'un servomoteur à au moins un câble électrique, permettant de limiter fortement la migration de liquide depuis la gaine du câble vers le dispositif de connexion, le dispositif de connexion étant de fabrication simple et économique.

L'invention a ainsi pour objet un dispositif de connexion d'un servomoteur à au moins un câble électrique, le dispositif comprenant une enveloppe externe comprenant au moins une entrée de câble, obturée par le câble en configuration opérationnelle du dispositif, ainsi qu'une ouverture destinée à être fermée par un élément de connexion électrique constituant une interface avec le servomoteur, l'élément de connexion électrique étant formé d'une paroi en un matériau isolant munie de contacts électriques de forme allongée et traversant la paroi selon une direction sensiblement orthogonale à la paroi, chaque contact électrique comprenant une extrémité intérieure au dispositif apte à être reliée à un câble électrique, une extrémité extérieure au dispositif apte à être reliée à un contact électrique correspondant du servomoteur.

Dans le dispositif selon l'invention, l'enveloppe externe comprend une ouverture permettant une évacuation de fluide présent à l'intérieur du dispositif en configuration opérationnelle du dispositif, et la paroi de l'élément de connexion électrique s'étend sur une partie de l'extrémité intérieure des contacts électriques.

La présence de l'ouverture d'évacuation de fluide dans l'enveloppe externe permet un équilibrage de pression instantané entre l'extérieur et l'intérieur du dispositif de connexion, ce qui limite les risques de migration de vapeur d'eau depuis la gaine du câble jusque dans le dispositif.

En outre, la disposition particulière de la paroi permet d'augmenter la distance de cheminement du courant électrique entre les contacts électriques.

De manière à renforcer l'étanchéité du dispositif, chaque contact électrique peut comprendre une portion intermédiaire située entre l'extrémité intérieure et l'extrémité supérieure et munie d'une rainure annulaire, et ladite paroi s'étend de manière à remplir lesdites rainures.

Pour également augmenter la distance de cheminement, au moins un élément de séparation en saillie de la paroi de l'élément de connexion métallique peut être disposé entre des extrémités intérieures de contacts électriques.

L'extrémité extérieure des contacts électriques du dispositif peut constituer une prise femelle, apte à être connectée à une prise mâle du contact électrique correspondant du servomoteur.

La prise femelle peut être entourée d'un élément coaxial en matériau isolant, ce qui améliore son isolation électrique.

L'enveloppe externe peut comprendre une entrée de câble d'alimentation électrique et une entrée de câble de transmission de données.

L'invention a également pour objet un servomoteur connecté à un dispositif décrit ci-dessus.

L'invention a enfin pour objet l'utilisation d'un tel servomoteur dans une centrale nucléaire.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 illustre schématiquement un dispositif selon l'invention, connecté à un servomoteur,
- les figures 2 à 5 sont des vues de détail de certaines parties du dispositif et du servomoteur.

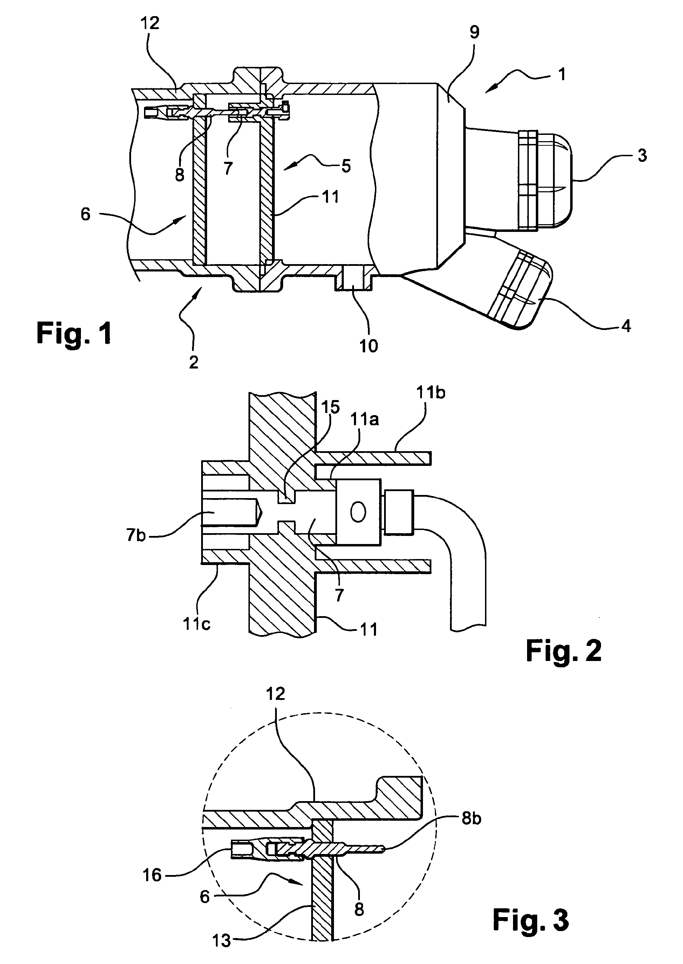

Tel qu'illustré à la figure 1, le dispositif 1 de connexion selon l'invention est connecté à un servomoteur 2. Le dispositif 1 comprend une enveloppe externe 9 comprenant deux entrées de câble 3,4. L'entrée 3 est apte à recevoir par exemple un câble d'alimentation électrique du moteur, tandis que l'entrée 4 est apte à recevoir un câble de transmission de données. Bien que deux entrées de câbles 3,4 soient représentées, le dispositif 1 peut ne comprendre qu'une seule entrée, apte à recevoir l'un ou l'autre des câbles électriques. Les entrées 3,4 sont avantageusement munies d'un presse-étoupe, afin d'assurer l'étanchéité entre le câble et l'entrée 3,4.

Le dispositif 1 comprend en outre un élément de connexion électrique 5 étanche, par exemple sous forme d'une plaque, principalement en matière plastique, apte à être connecté à un élément de connexion électrique 6, par exemple sous forme d'une plaque, du servomoteur 2. L'élément de connexion électrique 6 est relié à une enveloppe externe 12 du servomoteur 2.

L'élément de connexion 5 comprend une paroi 11 et des contacts électriques 7 traversant la paroi 11. Les contacts électriques 7 sont destinés à accueillir des fils électriques provenant du ou des câbles électriques et à les connecter à des contacts électriques 8 correspondants de l'élément de connexion électrique 6 du servomoteur 2.

Conformément à l'invention, l'enveloppe externe 9 du dispositif 1 comprend une ouverture 10, disposée en zone basse de l'enveloppe externe 9 en configuration opérationnelle du dispositif 1 et permettant l'évacuation de liquide en cas de présence de liquide dans le dispositif 1. Par exemple, en cas d'accident nucléaire, de l'eau peut pénétrer à l'intérieur du dispositif 1 en provenance du ou des câbles électriques. Lors de l'accident, la pression de vapeur d'eau augmente brutalement, mais l'ouverture 10 permet un équilibrage de pression instantané entre l'extérieur et l'intérieur du dispositif 1, ce qui limite la migration de vapeur d'eau depuis le ou les câbles vers le dispositif 1. En effet, s'il n'y avait pas d'ouverture 10, l'intérieur du dispositif 1 serait à pression atmosphérique, ce qui favoriserait la migration de vapeur d'eau vers l'intérieur du dispositif 1 du fait du grand écart de pression entre l'extérieur et l'intérieur du dispositif 1.

Si de la vapeur d'eau pénètre dans le dispositif 1 via l'ouverture 10, la vapeur d'eau va condenser à l'intérieur du dispositif 1. L'eau ainsi formée s'écoule ensuite vers l'extérieur du dispositif via l'ouverture 10.

Les figures 2 et 3 sont des vues de détail des contacts électriques 7 et 8 respectivement. Le contact électrique 7 est longitudinal et s'étend dans une direction sensiblement orthogonale à la paroi 11 de l'élément de connexion électrique 5. Le contact 7 comprend une extrémité intérieure au dispositif comprenant un orifice intérieur, non représenté, et une extrémité extérieure au dispositif comprenant un orifice extérieur 7b. Les orifices intérieur et extérieur 7b sont réalisés dans une portion métallique sensiblement cylindrique du contact électrique 7. La portion métallique est entourée de matière plastique de la paroi 11.

L'orifice intérieur est réalisé du côté intérieur au dispositif 1. Un fil issu du câble d'alimentation électrique est introduit dans l'orifice intérieur et est fixé au contact 7 par serrage à l'aide dune vis. L'orifice 7b est réalisé du côté extérieur au dispositif 1. L'orifice 7b constitue un contact femelle dans lequel est introduit un contact mâle 8b correspondant de l'élément de connexion 6 du servomoteur 2. L'orifice 7b est entouré d'un élément coaxial 11c en matière plastique.

Pour renforcer l'étanchéité entre l'orifice intérieur et l'orifice extérieur 7b de la paroi 11, le contact électrique 7 comprend avantageusement une rainure 15, située entre l'extrémité intérieure et l'extrémité extérieure du contact électrique 7, et disposée de préférence sur tout le pourtour de la portion métallique 7, sous la forme d'une gorge 15. Lors du moulage de la matière plastique de la paroi 11, le rétreint conduit à une expansion de matière longitudinalement et radialement par rapport à l'axe du contact électrique 7. Grâce à la présence de la gorge 15, la matière plastique s'appuie des faces perpendiculaires à l'axe du contact 7. La gorge 15 ainsi réalisée est remplie par de la matière plastique et assure l'étanchéité de la paroi 11, même après rétreint.

Il est également possible, pour renforcer l'étanchéité, de disposer une gaine, par exemple une gaine thermo-rétractable, sur les fils issus du câble et sur l'extrémité intérieure des contacts 7. On peut également envisager de remplir le dispositif 1 avec une matière de remplissage, avantageusement une résine. Le remplissage peut être réalisé à l'aide d'une ouverture de remplissage, non représentée, disposée dans l'enveloppe externe 9 du dispositif 1.

La paroi 11 s'étend, via une partie 11a, sur une partie de l'extrémité intérieure du contact électrique 7. De cette façon, la distance de cheminement du courant électrique entre deux contacts électriques 7 est augmentée. Par suite, la distance d'isolement électrique entre les contacts électriques 7 est augmentée.

En outre, un élément de séparation 11b en saillie de la paroi 11 est destiné à augmenter la distance de cheminement du courant électrique entre les contacts électriques 7.

L'élément de connexion électrique 6, tel qu'illustré à la figure 3, comprend une paroi 13 et des contacts électriques métalliques 8 disposés sensiblement orthogonalement à la paroi 13, et s'étendant de part et d'autre de la paroi 13. Chaque contact électrique 8 comprend, du côté du dispositif 1 de connexion, un contact mâle 8b apte à être introduit dans un contact femelle 7b correspondant de l'élément de connexion électrique 5 du dispositif 1. Pour faciliter l'insertion des contacts mâles 8b dans les contacts femelles 7b, les contacts mâles 8b sont en contact flottant avec la paroi 13 de l'élément de connexion électrique 6. Le raccordement interne au servomoteur 2 est réalisé à l'aide d'éléments de raccordement 16, par exemple des cosses cylindriques, avec ou sans isolant, qui sont par exemple enfichées ou clipsées sur l'extrémité intérieure des contacts électriques 8.

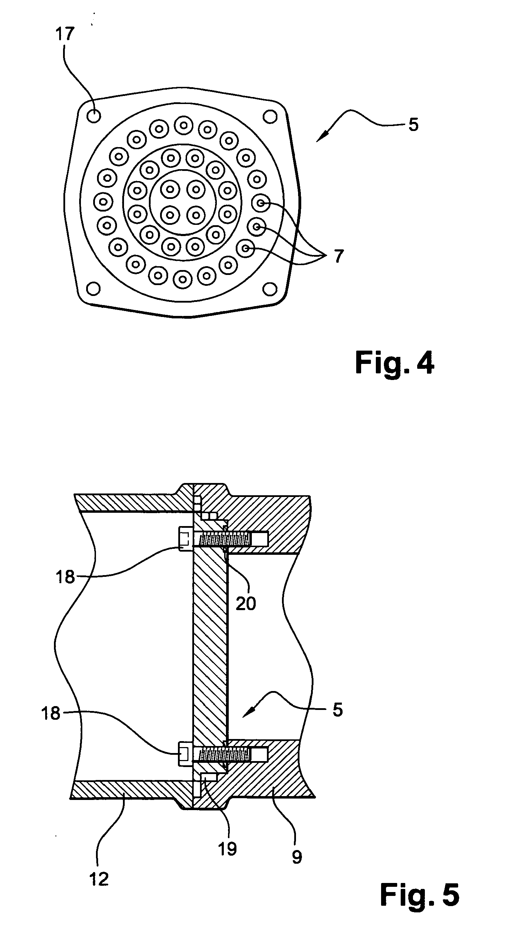

La figure 4 est une vue de face de l'élément de connexion électrique 5. L'élément de connexion électrique 5 comprend trois rangées concentriques de contacts électriques 7. Les deux rangées externes de contacts électriques 7 sont destinées à transmettre des données du servomoteur 2 à une commande externe, en particulier des données concernant la position de l'élément mécanique actionné par le servomoteur 2 et/ou des données concernant le couple appliqué à l'élément mécanique. La rangée interne de contacts électriques 7 comprend trois contacts 7 destinés à alimenter un moteur triphasé, ainsi qu'un contact électrique 7 destiné à la terre. L'élément de connexion électrique 5 comprend en outre des orifices 17 pour la fixation de l'élément de connexion électrique 5 par vissage sur l'enveloppe externe 9 du dispositif 1.

La figure 5 illustre la fixation de l'élément de connexion électrique 5 à l'enveloppe externe 9 du dispositif 1. Après le raccordement des câbles électriques à l'élément de connexion électrique 5, ce dernier est fixé à l'enveloppe 9 grâce à des vis 18, avec des joints d'étanchéité 19,20 toriques. Le dispositif 1 est ensuite connecté à l'élément de connexion électrique 6 du servomoteur 2. Un détrompeur assuré par la forme de l'élément de connexion électrique 5 interdit avantageusement tout mauvais montage. Enfin, l'enveloppe externe 9 du dispositif 1 est vissée à l'enveloppe externe 12 du servomoteur 2.

## Revendications

1. Dispositif (1) de connexion d'un servomoteur (2) à au moins un câble électrique comportant une enveloppe externe (9) comprenant:
au moins une entrée de câble (3,4), obturée par le câble en configuration opérationnelle du dispositif (1),
une ouverture fermée par un élément de connexion électrique (5) constituant une interface avec le servomoteur (2), l'élément de connexion électrique (5) étant formé d'une paroi (11) en un matériau isolant munie de contacts électriques (7) de forme allongée et traversant la paroi (11) selon une direction sensiblement orthogonale à la paroi (11), chaque contact électrique (7) comprenant une extrémité intérieure au dispositif (1) apte à être reliée à un câble électrique, une extrémité extérieure au dispositif (1) apte à être reliée à un contact électrique (8) correspondant du servomoteur (2), la paroi (11a) de l'élément de connexion électrique (5) s'étendant sur une partie de l'extrémité intérieure des contacts électriques (7), et
une ouverture (10) permettant une évacuation de fluide présent à l'intérieur du dispositif (1) en configuration opérationnelle du dispositif (1).

2. Dispositif (1) selon la revendication 1, **caractérisé en ce que** chaque contact électrique (7) comprend une portion intermédiaire située entre l'extrémité intérieure et l'extrémité supérieure et munie d'une rainure annulaire (15), ladite paroi (11) s'étendant de manière à remplir lesdites rainures (15).

3. Dispositif (1) selon la revendication 1 ou 2, **caractérisé en ce qu'**au moins un élément de séparation (11b) en saillie de la paroi (11) de l'élément de connexion métallique (5) est disposé entre des extrémités intérieures de contacts électriques (7).

4. Dispositif (1) selon l'une des revendications 1 à 3, **caractérisé en ce que** l'extrémité extérieure des contacts électriques (7) du dispositif (1) constitue une prise femelle (7b), apte à être connectée à une prise mâle (8b) du contact électrique (8) correspondant du servomoteur (2).

5. Dispositif (1) selon la revendication 4, **caractérisé en ce que** la prise femelle (7b) est entourée d'un élément coaxial (11c) en matériau isolant.

6. Dispositif (1) selon l'une des revendications 1 à 5, **caractérisé en ce que** l'enveloppe externe (9) comprend une entrée (3) de câble d'alimentation électrique et une entrée (4) de câble de transmission de données.

7. Servomoteur (2), **caractérisé en ce qu'**il est connecté à un dispositif (1) selon l'une des revendications 1 à 6.

8. Utilisation d'un servomoteur (2) selon la revendication 7 dans une centrale nucléaire.

## Claims

1. A device (1) for connecting a servomotor (2) to at least one electrical cable, comprising an outer enclosure (9) including:
at least one input cable (3, 4), covered by the cable in the operational configuration of the device (1),
an opening closed by an electrical connection element (5) making up an interface with the servomotor (2), the electrical connection element (5) being formed by a wall (11) made from an insulating material provided with elongate electrical contacts (7) passing through the wall (11) in a direction substantially orthogonal to the wall (11), each electrical contact (7) including an end inside the device (1) that can be connected to an electrical cable, an end outside the device (1) that can be connected to a corresponding electrical contact (8) of the servomotor (2), the wall (11a) of the electrical connection element (5) extending over part of the inner end of the electrical contacts (7),
an opening (10) making it possible to discharge fluid present inside the device (1) in the operational configuration of the device (1).

2. The device (1) according to claim 1, **characterized in that** each electrical contact (7) includes an intermediate portion situated between the inner end and the upper end and provided with an annular slot (15), said wall (11) extending so as to fill said slots (15).

3. The device (1) according to claim 1 or 2, **characterized in that** at least one separating element (11b) protruding from the wall (11) of the metal connecting element (5) is positioned between the inner ends of the electrical contacts (7).

4. The device (1) according to one of claims 1 to 3, **characterized in that** the outer end of the electrical contacts (7) of the device (1) makes up a female plug (7b), which can be connected to a male plug (8b) of the corresponding electrical contact (8) of the servomotor (2).

5. The device (1) according to claim 4, **characterized in that** the female plug (7b) is surrounded by a coaxial element (11c) made from an insulating material.

6. The device (1) according to one of claims 1 to 5, **characterized in that** the outer enclosure (9) includes a power cable input (3) and a data transmission cable input (4).

7. A servomotor (2), **characterized in that** it is connected to a device (1) according to one of claims 1 to 6.

8. A use of a servomotor (2) according to claim 7 in a nuclear power plant.

## Patentansprüche

1. Vorrichtung (1) zur Verbindung eines Servomotors (2) mit mindestens einem elektrischen Kabel, umfassend eine äußere Hülle (9), umfassend:
mindestens einen Kabeleingang (3, 4), der in der Betriebskonfiguration der Vorrichtung (1) durch das Kabel verschlossen ist,
eine Öffnung, die durch ein Element der elektrischen Verbindung (5) geschlossen ist, bildend eine Schnittstelle mit dem Servomotor (2), wobei das Element der elektrischen Verbindung (5) durch eine Wand (11) aus einem isolierenden Material gebildet ist, ausgestattet mit elektrischen Kontakten (7), die eine verlängerte Form aufweist und die Wand (11) in einer Richtung durchquert, die im Wesentlichen othogonal zur Wand (11) ist, wobei jeder elektrische Kontakt (7) ein inneres Ende zur Vorrichtung (1) umfasst, das dazu ausgelegt ist, mit einem elektrischen Kabel verbunden zu werden, ein äußeres Ende zur Vorrichtung (1), das dazu ausgelegt ist, mit einem elektrischen Kontakt (8) verbunden zu werden, der dem Servomotor (2) entspricht, wobei sich die Wand (11a) des Elements der elektrischen Verbindung (5) auf einem Teil des inneren Endes der elektrischen Kontakte (7) erstreckt, und
eine Öffnung (10), die eine Entfernung von Fluid ermöglicht, das im Inneren der Vorrichtung (1) in der Betriebskonfiguration der Vorrichtung vorhanden ist.

2. Vorrichtung (1) nach Anspruch 1, **dadurch gekennzeichnet, dass** jeder elektrische Kontakt (7) einen Zwischenteil umfasst, der sich zwischen dem inneren Ende und dem oberen Ende befindet und mit einer ringförmigen Nut (15) ausgestattet ist, wobei sich die Wand (11) so erstreckt, dass sie die Nuten (15) ausfüllt.

3. Vorrichtung (1) nach Anspruch 1 oder 2, **dadurch gekennzeichnet, dass** mindestens ein Trennelement (11b), das aus der Wand (11) des metallischen Verbindungselements (5) hervorspringt, zwischen inneren Enden von elektrischen Kontakten (7) angeordnet ist.

4. Vorrichtung (1) nach einem der Ansprüche 1 bis 3, **dadurch gekennzeichnet, dass** das äußere Ende der elektrischen Kontakte (7) der Vorrichtung (1) einen weiblichen Stecker (7b) bildet, der dazu ausgelegt ist, mit einem männlichen Stecker (8b) des elektrischen Kontakts (8), der dem Servomotor (2) entspricht, verbunden zu werden.

5. Verfahren (1) nach Anspruch 4, **dadurch gekennzeichnet, dass** der weibliche Stecker (7b) von einem koaxialen Element (11c) aus isolierendem Material umgeben ist.

6. Vorrichtung nach einem der Ansprüche 1 bis 5, **dadurch gekennzeichnet, dass** die äußere Hülle (9) einen Kabeleingang (3) zur elektrischen Versorgung und einen Kabeleingang (4) zur Übertragung von Daten umfasst.

7. Servomotor (2), **dadurch gekennzeichnet, dass** er mit einer Vorrichtung (1) nach einem der Ansprüche 1 bis 6 verbunden ist.

8. Verwendung eines Servomotors (2) nach Anspruch 7 in einem Kernkraftwerk.
